# EUROPÄISCHE PATENTSCHRIFT

(11) **EP 0 895 386 B1**
(45) Veröffentlichungstag und Bekanntmachung des Hinweises auf die Patenterteilung: **29.01.2003**
(21) Anmeldenummer: 97113212.1
(22) Anmeldetag: 31.07.1997
(51) Int. Cl.: H04L 27/227

(54) **Trägerregelkreis für einen Empfänger von digital übertragenen Signalen**
Carrier control circuit for a receiver of digital transmitted signals
Circuit de régulation de porteuse pour un récepteur de signaux numériques

(43) Veröffentlichungstag der Anmeldung: 03.02.1999
(73) Patentinhaber: Micronas Semiconductor Holding AG, 8005 Zürich (CH)
(72) Erfinder: Temerinac, Miodrag, Prof.-Dr.-Ing., 79194 Gundelfingen (DE); Witte, Franz-Otto, Dr.-Ing., 79312 Emmendingen (DE)
(74) Vertreter: Hornig, Leonore, Dr.

(56) Entgegenhaltungen:
- EP-A- 0 281 652
- EP-A- 0 381 636
- EP-A- 0 692 896
- EP-A- 0 769 364
- US-A- 4 687 999
- US-A- 4 827 515
- US-A- 5 093 847

## Beschreibung

Die Erfindung betrifft einen Trägerregelkreis für einen Empfänger von digital übertragenen Signalen, die als Symbole mittels einer Quadraturmodulation übertragen sind. Derartige Übertragungsverfahren sind beispielsweise auch unter folgenden Kurzbezeichnungen bekannt: FSK (= Frequency Shift Keying), PSK (= Phase Shift Keying), BPSK (=Binary Phase Shift Keying), QPSK (= Quartenary Phase Shift Keying) und QAM (= Quadratur Amplitude Modulation). Die Empfängerschaltungen hierzu sind bekannt und haben in der Regel einen ähnlichen Funktionsaufbau. Ein wichtiger Bestandteil ist ein analoger oder digitaler Trägerregelkreis, der dafür sorgt, daß ein Quadraturdemodulator mit der richtigen Phase und Frequenz arbeitet. Der Quadraturdemodulator dient der Demodulation des quadraturmodulierten Signals, um über die getrennten Quadratursignalkomponenten mittels einer Symbolerkennungseinrichtung die einzelnen Symbole zu bestimmen, aus denen dann letztendlich der gewünschte Datenstrom für die weitere Verarbeitung rekonstruiert werden kann. Hierzu ist es erforderlich, den im Trägerregelkreis vorhandenen Quadraturdemodulator mit der exakten Phase und Frequenz zu betreiben, damit die beiden Quadratursignalkomponenten sicher getrennt werden können.

Für Empfänger von digital übertragenen Signalen werden zunehmend rein digitale Schaltungstechniken verwendet, deren grundsätzlichen Vorteile bezüglich Stabilität, Reproduzierbarkeit, Störunempfindlichkeit usw. bekannt sind. Analog arbeiten nur diejenigen Stufen, deren Signalfrequenzen für eine Digitalisierung zu hoch sind. Wo die jeweilige Schnittstelle für die Digitalisierung liegt, hängt von einer Abwägung zwischen den geforderten Eigenschaften und dem zugehörigen Schaltungsaufwand ab, wobei eine wichtige Größe die erforderliche Digitalisierungsfrequenz ist, die in der Regel durch den verwendeten Systemtakt im Empfänger vorgegeben und durch die jeweilige Schaltungstechnologie in der maximalen Frequenzhöhe begrenzt ist. Für die Schaltungsrealisierung ist es zweckmäßig, wenn die Digitalisierung vor dem Trägerregelkreis, z.B. im Tuner oder im Zwischenfrequenzumsetzer, stattfindet, weil dann die Signalverarbeitung des gesamten Trägerregelkreises eine rein digitale ist.

Bei der digitalen Quadraturdemodulation des digitalisierten Eingangssignals wird ein digitales Umsetzungssignalpaar verwendet, dessen digitaler Werteverlauf sinus- und cosinusförmig ist. Die einzelenen Sinus- und Cosinuswerte werden von einem digitalen Oszillator mittels eines überlaufenden Akkumulators und einer Sinus- und Cosinustabelle gebildet. Die Überlauffrequenz des digitalen Oszillators ist identisch mit der Frequenz der Umsetzungssignalpaars. Die Frequenzgenauigkeit des überlaufenden Akkumulators ist um so besser, je größer das Verhältnis der Systemtaktfrequenz zur Umsetzungsfrequenz ist, wobei die Auflösung im wesentlichen durch die Stellenanzahl des zu akkumulierenden Zahlenwertes und der entsprechenden Stellenanzahl des Akkumulators bestimmt wird.

Damit der Mischungsvorgang für die Demodulation im Quadraturdemodulator mit der exakten Phase und Frequenz erfolgt, wird der frequenzsteuerbare Oszillator mittels einer Rückkopplungseinrichtung in der Phase und der Frequenz nachgeregelt. Hierzu werden mittels eines Fehlerdetektors aus den Ausgangssignalen des Quadraturdemodulators oder der nachfolgenden Stufen Phasen- und Frequenzabweichungswerte bestimmt, die angeben, wie weit die Phase und Frequenz des Umsetzungssignalpaares vom jeweiligen Sollwert abweicht. Schließlich wird ein Nachstellsignal für den frequenzsteuerbaren Oszillator gebildet. Ohne diese phasenstarre Nachregelung wäre die spätere Zuordnung eines Symbols zu einem vorgegebenen Phasenort oder Phasenbereich nicht mehr möglich. Durch die Bandbegrenztheit der Signale sowie durch überlagerten Stör- oder Rauschsignale verwischt sich der ursprüngliche punktförmige Phasenort zu einem flächigen Phasenund Amplitudenbereich, wobei sich die Phasengrenzen unter ungünstigen Bedingungen sogar überlappen. Die bekannten Vorteile dieser digitalen Codierung bestehen darin, daß der ursprünliche Datenstrom auf der Empfängerseite leicht dekodiert werden kann, wobei die digitale Codierung auch relativ unempfindlich gegenüber Störungen auf dem Übertragungsweg oder im Empfänger ist.

Ein Beispiel für einen Trägerregelkreis innerhalb eines QAM-Empfängers (=Quadratur Amplitude Modulation) ist in WO 96/17459 beschrieben, siehe die dortige Fig. 4 mit zugehöriger Beschreibung.

Ein anderes Beispiel für einen Trägerregelkreis für einen QAM-Empfänger mit einer 16-QAM- oder 64-QAM-Modulation ist in US 4 687 999 beschrieben. Für die Bestimmung der Phasenabweichungen werden dabei lediglich diejenigen QAM-Symbole verwendet, die auf den Winkelhalbierenden der vier Quadranten liegen, die durch das Quadratursignalpaar x, y gebildete werden und deren Amplitudenkreise nicht andere Symbole innerhalb des Quadranten schneiden. Um Mehrdeutigkeiten bei der Phasenbestimmung zu vermeiden, sind die ausgewählten Symbole mit quadratischen Zonen umgeben. Die Phasenabweichung innerhalb der Zonen wird lediglich über Ihr Vorzeichen ausgewertet. Beim Verlassen der Zone wird der Vorzeichenwert solange gespeichert, bis er infolge einer erneuten Zonenüberschreitung gegebenenfalls zu ändern ist. Die Glättung des binären Phasenabweichungssignals zur Steuerung eines VCO in der Trägerregelschleife erfolgt mittels eines Tiefpasses.

EP-A-0 281 652 betrifft ein Verfahren zum Gewinnen eines Signals, das die Phasendifferenz zwischen einem lokalen Trägersignal und dem Träger eines amplituden-und/oder phasenumgetasteten Empfangssignals wiedergibt. Ein wesentlicher Unterschied von diesem Dokument zum Erfindungsgegenstand besteht darin, daß die Bewertungseinrichtung in diesem Dokument mit dem Trägerregelkreis und der Symbolerkennung eng verzahnt ist. Die Beeinflußung des Trägerregelkreises über eine Gewichtung der ermittelten Phasenabweichungswerte erfolgt vor dem Regelkreisfilter. Mehr oder weniger unzuverlässige Phasenabweichungswerte gehen also in den Regelvorgang mit ein.

Von diesem bekannten Stand der Technik aus gesehen ist es Aufgabe der Erfindung, die Empfängerseite noch unempfindlicher gegenüber Störungen auszubilden.

Die Lösung der Aufgabe besteht darin, daß der Trägerregelkreis mit einer Bewertungseinrichtung verkoppelt wird, die aus Signalen des Trägerregelkreises, insbesondere aus Signalen der Symbolerkennungseinrichtung, einen Zuverlässigkeitswert für den jeweils im Detektor gemessene Phasen- und/oder Frequenzabweichungswert bestimmt und den Trägerregelkreis in Abhängigkeit von dem ermittelten Zuverlässigkeitswert gesteuert.

Die Lösung der Aufgabe beruht auf der Erkenntnis, daß bei stark gestörten Signalen nicht nur die Unsicherheit bei der Symbolerkennung eine wesentliche Rolle spielt, sondern daß ein erheblicher Beitrag unrichtig erkannten Symbole durch den Regelvorgang im Trägerregelkreis selbst bedingt ist. Bei stark gestörten Signalen reagiert die Regelung viel zu empfindlich oder gar falsch auf verauschte Phasenund/oder Frequenzabweichungswerte und versucht die Phase ständig nachzuregeln. Dadurch wird die Phasenreferenz für die Auswertung sehr unsicher und die richtige Erkennung des jeweiligen Symbols sehr beeinträchtigt. Durch die Einführung eines Zuverlässigkeitswertes läßt sich der Trägerregelkreis adaptiv entsprechend dem gemessenen Rausch- oder Störpegel steuern. Dies kann einfach dadurch erfolgen, daß bei geringen Zuverlässigkeitswerten der Trägerregelkreis insgesamt oder für relativ hochfrequente Störkomponenten unempfindlicher wird oder seine Regelzeitkonstante anpaßt. Besonders effektiv ist eine individuelle Verarbeitung der einzelnen Abweichungswerte, indem bei geringen Zuverlässigkeitswerten die zugehörigen Phasen- oder Frequenzabweichungswerte einen geringen Regelbeitrag liefern oder gar ganz gesperrt werden, jedoch bei ausreichenden Zuverlässigkeitswerten einen normalen oder hohen Regelbeitrag Diese Gewichtung oder Ausblendung hat den Vorteil, daß insbesondere einzeln oder burstartig auftretende Störungen den momentanen Phasenzustand nicht stören, wobei weder die Regelsteilheit noch die Regelgeschwindigkeit verändert werden muß. Der Trägerregelkreis kann so nach wie vor raschen Änderungen leicht folgen, sofern die Signale als zuverlässig erkannt werden.

Für die Bestimmung von Zuverlässigkeitswerten werden charakteristische Signalveränderungen ausgewertet, die sich aufgrund der Störungen ergeben. Wie bereits erwähnt, verbreitet sich mit zunehmender Störung der definitionsgemäße Ort für das Symbol sowohl in der Phasen - als auch in der Amplitudenrichtung. Wenn als Störmodell ein Rauschen mit Gaußverteilung angenommen wird, das sich den beiden Quadratursignalkomponenten unkorreliert überlagert, dann läßt sich bei diesem Modell die Wahrscheinlichkeit berechnen, mit der das Symbol als richtig oder falsch erkannt wird. Die gemessenen Phasen- und Amplitudenabweichungswerte vom Sollwert können entsprechend dem rechnerisch bestimmbaren Wahrscheinlichkeitsverlauf auch dahingehend gedeutet und ausgewertet werden, daß diese Werte ein Maß für die Zuverlässigkeit darstellen. Je kleiner die Abweichungswerte sind, desto größer ist die Zuverlässigkeit und desto geringer ist die Unsicherheit, daß die Auswertung ein falsches Symbol liefert. Es ist für die erfinderische Beeinflussung des Trägerregelkreises unerheblich, ob die Zuordnung zwischen den meßbaren Abweichungswerten und dem berechenbaren Zuverlässigkeitswert wertemäßig exakt ist, dies hängt zudem auch von dem jeweiligen Störmodell ab, das nur als eine Näherung realer Verhältnisse angesehen werden kann. Es reicht daher für eine Verbesserung schon aus, wenn der Zuverlässigkeitswert relativ grob erfaßt wird, beispielsweise durch die Vorgabe von Schwellwerten für die gemessenen Abweichungswerte.

Selbstverständlich ist es auch möglich, daß die Zuverlässigkeitswerte auch wesentlich aufwendiger oder auf andere Weise gebildet werden, indem beispielsweise rauschbedingte Signalschwankungen im demodulierten oder noch nicht demodulierten Signal ausgewertet werden. Mittels Filterschaltungen kann die Bestimmung auf Frequenzbereiche beschränkt werden, die von der Modulation weitgehend unabhängig sind.

Ein weiterer Gesichtspunkt bei der Auswertung der Zuverlässigkeit ist die jeweilige Wirkung des Abweichungswerts auf den Regelkreis. Soll sich aufgrund des Abweichungswerts der Regelzustand ändern oder im momentanen Zustand verharren? Mittels einer Gewichtung des Wahrscheinlichkeitswertes kann beispielsweise der Verharrungszustand oder der Änderungszustand betont werden. Die entsprechende Gewichtung kann beispielsweise dadurch erfolgen, daß der Wahrscheinlichkeitswert mit einem Ziehkraftwert multipliziert wird, der sich aus dem Abstand der gemessenen Phase vom jeweiligen Symbol- Sollwert ergibt.

Besonders vorteilhaft ist es, wenn die Bestimmung der Abweichung getrennt nach Phase und Amplitude ausgeführt werden kann, indem ein Koordinatenumsetzer die karthesischen Koordinaten der Quadratursignalkomponenten in polare Koordinaten umsetzt. Für digitale Systeme eignen sich hierzu insbesondere die iterativen Umsetzer nach dem Cordic-Verfahren. Die Auswertung der Zuverlässigkeitswerte kann dann über geeignete Kennlinien oder Kennfelder erfolgen, die den einzelnen Abweichungswerten neue Werte zuordnen, die für die Regelung verwendet werden. Die Kennlinien oder Kennfelder sind gegebenenfalls in Tabellen gespeichert. Im einfachsten Fall bestehen sie aus einer geknickten Kennlinie, einer ein- oder zweiseitigen Begrenzung oder einer ein- oder zweiseitigen Signalunterdrückung. Mit Schwellwertdetektoren, die auch als Fensterkomperatoren ausgebildet sein können, lassen sich derartige Kennlinien leicht realisieren, insbesondere wenn lediglich Blockiereinrichtungen gesteuert werden müssen.

Für den Trägerregelkreis stellt die Rückkopplungseinrichtung das Regelkreisfilter dar, das die gemessenen Abweichungswerte für die Phase und gegebenenfalls Frequenz in ein Nachstellsignal für den Oszillator umsetzt. Ein gutes Regelverhalten läßt sich dabei mittels einer PID-Reglerstruktur (= Proportional - Integral - Differenzial) erreichen, die als Eingangssignale den Phasenabweichungswert und den Frequenzabweichungswert verwendet. Mittels Tor- oder Blockiereinrichtungen, die vom Zuverlässigkeitswert gesteuert sind, kann die Verarbeitung dieser Signale unterbrochen werden. Es ist sogar möglich, daß die Abweichungswerte vor der Verarbeitung in der Rückkopplungseinrichtung mittels eigener Filterschaltungen geglättet und von Signalausreißern befreit werden. Besonders geeignet sind hierfür MTA-Filter (= Moving Time Averager), weil eine Unterbrechung des Taktsignals die gleiche Wirkung für den jeweiligen Abweichungswert wie ein sperrendes Tor hat. MTA-Filter eigenen sich besonders dann, wenn gleichzeitig eine Reduktion der Datenrate erwünscht wird.

Für die Koordinatenumsetzung wird zweckmäßigerweise ein modifiziertes Cordic-Verfahren verwendet, bei dem die Quadratursignalkomponenten zur Auswertung in den ersten Quadrant gespiegelt werden. Dies erfolgt durch eine sinngemäße Invertierung der Vorzeichen und/oder Vertauschung der Quadratursignalkomponenten. Wenn die Symbole außer durch unterschiedlichen Phasen auch durch unterschiedliche Amplituden definiert sind, dann ist für die Bestimmung der Zuverlässigkeitswerte gegebenenfalls eine Amplituden-Normierung vor dem Koordinatenumsetzer erforderlich, bei der die aktuellen Quadratursignalkomponenten mit den Sollwerten des zugehörigen Symbols komplex multipliziert werden. Aus dem gespiegelten Phasenwert wird durch die Subtraktion eines von der Modulation abhängigen Phasenkorrekturwertes auf einfache Weise der zugehörige Phasenabweichungswert gebildet. Beispielsweise beträgt der Phasenkorrekturwert bei der QPSK-Modulation π/4. Aus mindestens zwei zeitlich aufeinanderfolgenden Phasenwerten wird mittels einer Modulo-Differenzbildung ein Frequenzabweichungswert gebildet. Die Modulo-Differenzbildung erfolgt im Zweierkomplement-Zahlensystem durch eine Nichtberücksichtigung der Überlaufund Vorzeichenstelle.

Die Erfindung und vorteilhafte Ausgestaltung werden nun anhand der Figuren der Zeichnung näher erläutert:
Fig. 1 zeigt als Blockschaltbild einen Empfänger für digital übertragene Signale,
Fig. 2 zeigt schematisch Teilschaltungen des Trägerregelkreises,
Fig. 3 bis Fig. 6 zeigen Zeigerdiagramme zur Phasenspiegelung,
Fig. 7 zeigt eine Wahrscheinlichkeitsverteilung im I-Q-Diagramm,
Fig. 8 zeigt eine Wahrscheinlichkeitsverteilung im Phasen-Betrags-Diagramm,
Fig. 9 zeigt für eine QPSK-Modulation eine I-Q-Wahrscheinlichkeitsverteilung,
Fig. 10 zeigt das zugehörige Phasen-Betrags-Diagramm für den ersten Quadranten,
Fig. 11 zeigt eine mit der Ziehkraft gewichtete Wahrscheinlichkeitsverteilung,
Fig. 12 zeigt über ϕd-b-Koordinaten ein Zuverlässigkeits-Aufsichtsdiagramm,
Fig. 13 bis 15 zeigen Aufsichtsdiagramme mit unterschiedlichen S/N-Werten und
Fig. 16 bis 18 zeigen kritische Bereiche der Zuverlässigkeitsbestimmung.

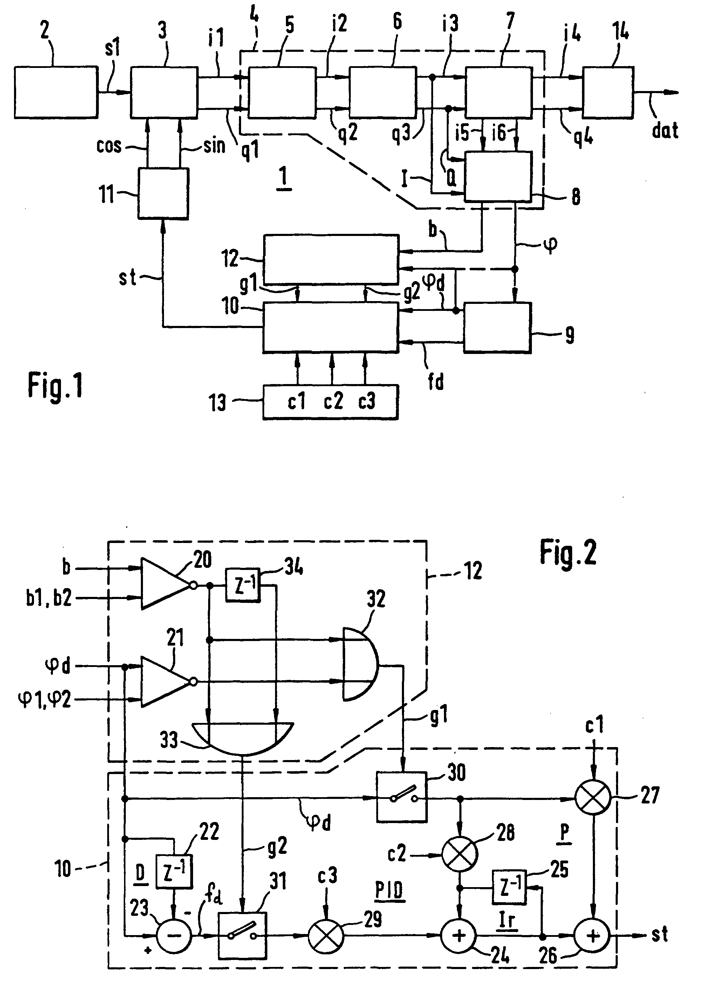

Das Blockschaltbild von Fig. 1 zeigt im wesentlichen die Funktionseinheiten eines Trägerregelkreises 1 für einen Empfänger von digital übertragenen Signalen. Den Eingang stellt eine digitale Signalquelle 2 dar, die beispielsweise einen Tuner, ein Zwischenumsetzer oder eine Kabelempfangsstation sein kann. Sie enthält jedenfalls einen Analog/Digital-Umsetzer, der das zugeführte Signal mittels eines Systemtaktes digitalisiert und dieses digitalisierte Signal s1 einem Quadraturdemodulator 3 zuführt. Seine Ausgangssignale sind eine Inphasenkomponente i1 und eine Quadraturphasenkomponente q1. Die Quadratursignalkomponenten i1, q1 sind einer Symbolerkennungseinrichtung 4 zugeführt, die als bekannte Schaltungen einen Abtastinterpolator 5, ein Nyquist-Empfängerfilter 6, eine Symbolentscheidungsstufe 7 und in der Regel auch einen Koordinatenumsetzer 8 enthält, der eingangsseitig mit einer Inphasenkomponente I und einer Quadraturphasenkomponente Q aus der Symbolerkennungseinrichtung 4 gespeist ist. Vor dem Koordinatenumsetzer 8 kann sich gegebenenfalls noch eine Normierungsstufe befinden, die wie bereits erwähnt eine komplexe Multiplikation ausführt.

Der Trägerregelkreis 1 enthält ferner einen Detektor 9 zur Bildung eines Phasenabweichungswertes ϕd und gegebenenfalls eines Frequenzabweichungswertes fd. Eingangsseitig ist der Detektor 9 zweckmäßigerweise mit einem Phasenwert ϕ aus dem Koordinatenumsetzer 8 gespeist. An den Detektor 9 schließt sich im Trägerregelkreis 1 eine Rückkopplungseinrichtung 10 an, die eingangsseitig mit dem Phasen- und Frequenzabweichungswert aus dem Detektor 9 gespeist ist und ausgangsseitig ein Nachstellsignal st für einen frequenzsteuerbaren Oszillator 11 liefert. Dieser erzeugt ein Umsetzungssignalpaar cos, sin, das zur Demodulation dem Quadraturdemodulator 3 zugeführt ist. Damit ist der Trägerregelkreis 1 geschlossen.

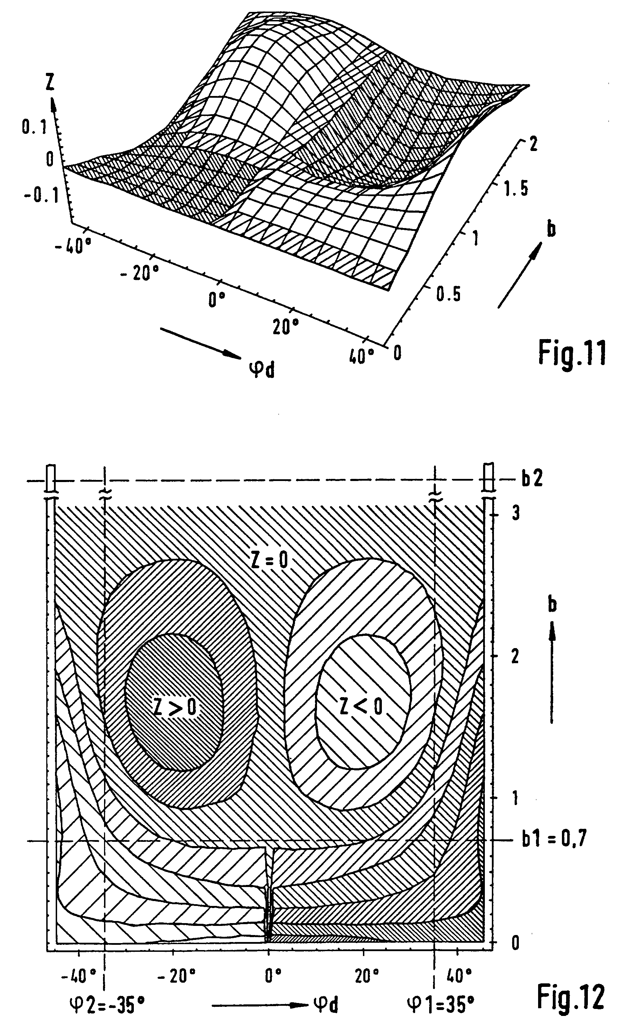

Die bisherige Beschreibung des Trägerregelkreises 1 entspricht grundsätzlich bekannten Schaltungen. Die verbesserte Funktionsweise des Trägerregelkreises 1 nach der Erfindung erfolgt durch eine Bewertungseinrichtung 12, die im Ausführungsbeispiel von Fig. 1 eingangsseitig mit dem Koordinatenumsetzer 8 gekoppelt ist, aus dessen Ausgangssignalen Zuverlässigkeitswerte bestimmt und damit die Rückkopplungseinrichtung 10 beeinflußt. Die Bewertungseinrichtung 12 erzeugt ähnlich wie der Detektor 9 einen Phasenabweichungswert ϕd oder übernimmt diesen Wert. Der in den ersten Quadranten gespiegelte Amplituden- und/oder Betragswert b des Koordinatenumsetzers 8 wird direkt übernommen. Die Auswertung des Phasenabweichungswertes ϕd kann dadurch auf einfache Weise über zwei symmetrisch liegende Schwellwerte ϕ1, ϕ2 erfolgen (vgl. Fig. 12). Beim Betragswert b liegen die Schwellwerte b1, b2 unsymmetrisch zur Sollamplitude mit dem Wert Eins (vgl. Fig. 12). Der größere Schwellwert b2 kann sogar ohne Nachteil so groß gewählt werden, daß er nur selten vom Betragswert b überschritten wird - er kann daher auch entfallen. Die Auswertung über die Schwellwerte ergibt ein erstes und ein zweites Torsteuersignal g1, g2, die innerhalb der Rückkopplungseinrichtung 10 Blockiereinrichtungen 30,31, z.B. Tore, steuern. Noch zu erwähnen ist ein Koeffizientenspeicher 13, der an die PID-Rückkopplungseinrichtung 10 die entsprechenden Filterkoeffizienten c1, c2, c3 liefert.

Im Blockschaltbild von Fig. 1 schließt sich an die Symbolerkennungseinrichtung 4 ein Umsetzer 14 an, der aus den erkannten Symbolen wieder einen seriellen Datenstrom dat bildet. Der Abtastinterpolator 5 bestimmt den optimalen Zeitpunkt, zu dem aus den Quadratursignalkomponenten i1, q1 der Symbolwert abgegriffen werden sollte. Bei der digitalen Realisierung bildet der Abtastinterpolator aus den benachbarten Stützwerten mittels Interpolation rein rechnerisch den richtigen Abtastzeitpunkt. Seine Ausgangssignale sind die Quadratursignalkomponenten i2, q2 die dem Nyquist-Empfängerfilter 6 zugeführt sind, das in der Regel auch eine Abtastratenumsetzung vom Symstemtakt auf die Symbolfrequenz durchführt. Die Quadratursignalkomponenten i3, q3 nach dem Nyquist-Empfängerfilter 6 sind im Falle einer QPSK-Modulation in der Symbolerkennungseinrichtung 4 leicht über die Vorzeichen der Komponenten i3, q3 zu dekodieren. Die Quadratursignalkomponenten i4, q4 am Ausgang der Symbolerkennungseinrichtung 4 enthalten nur noch die höchstwertigen Stellen, durch die die einzelnenen Symbole definiert sind. Für die Bildung der Abweichungswerte ϕd, fd im Detektor 9 und des zugehörigen Zuverlässigkeitswertes in der Bewertungseinrichtung 12 müssen die Quadratursignalpaare möglichst alle verfügbaren Stellen enthalten, weshalb die Quadratursignalkomponenten i3, q3 zur Auswertung verwendet werden, die auch mit der niederen Symbolfrequenz zur Verfügung stehen. Die folgende Beschreibung, die sich im wesentlichen mit der Bildung des Zuverlässigkeitswertes befaßt, verwendet nur noch die allgemeineren Bezugszeichen I, Q für die Quadratursignalkomponenten.

In Fig. 2 ist schematisch als Blockschaltbild ein Ausführungsbeispiel für die Rückkopplungseinrichtung 10 und Bewertungseinrichtung 12 dargestellt. Dabei ist die Rückkopplungseinrichtung 10 als PID-Regler ausgebildet, der im Proportionalteil P und im Integralteil Ir den Phasenabweichungswert ϕd und im Differenzialteil D den Frequenzabweichungswert fd verarbeitet. Die Bewertungseinrichtung 12 enthält im Eingang einen Schwellwertdetektor 20 für den Betragswert b und einen Schwellwertdetektor 21 für den Phasenwert ϕ oder den zugehörigen Abweichungswert ϕd. Die zugehörigen Schwellwerte sind die Amplitudenschwellen b1, b2 bzw. die Phasenschwellen ϕ1, ϕ2. Ein Schwellwertdetektor mit zwei Schwellwerten wird auch als Fensterkomparator bezeichnet. Die Zuordnung der einzelnen Funktionseinheiten in Fig. 2 zu der Bewertungseinrichtung 12 oder Rückkopplungseinrichtung 10 ist für die zusammenwirkende Funktionsweise unwesentlich.

Aus dem Phasenabweichungswert ϕd wird mittels einer Verzögerungseinrichtung 22 und eines Subtrahierers 23 ein Frequenzabweichungswert fd gebildet. Nimmt beispielsweise der Frequenzabweichungswert konstant zu, dann bedeutet dies, daß der durch die Quadratursignalkomponenten I, Q definierte Zeiger mit konstanter Frequenz rotiert. Die Differenz am Ausgang des Subtrahierers 23 bleibt dabei konstant und ihr Wert ist ein genaues Maß für die Frequenzabweichung. Wenn der frequenzsteuerbare Oszillator 11 sein Umsetzungssignalpaar cos, sin genau mit der Frequenz des Quadratursignalträgers erzeugt, dann bleibt der resultierende Zeiger stehen, so daß der Frequenzabweichungswert fd konstant den Wert Null hat. Die richtige Quadraturdemodulation setzt jedoch voraus, daß der resultierende Zeiger auch keinen Phasenabweichungswert ϕd aufweist, weil sonst die Referenzphase nicht stimmt. Die Nachregelung der Phase erfolgt in der Rückkopplungseinrichtung 10 insbesondere mittels des Integralteils Ir, wodurch langanhaltende Phasenabweichungen ausgeregelt werden. Der Integralteil Ir besteht aus einer Akkumulatorschleife mit einem Addierer 24 und einer Verzögerungseinrichtung 25. Die Regelsteilheit des Integralteils Ir darf bekanntlich nicht hoch sein, weil sonst leicht Regelschwingungen auftreten können. Für relativ kurzzeitige Phasenabweichungswerte ϕd ist eine größere Regelsteilheit erwünscht, die der dargestellte PID-Regler durch den Proportionalteil P bewirkt, dessen relativ große Rückstell- oder Ziehkraft proportional zum jeweiligen Phasenabweichungswert ϕd ist. Die einzelnen Regelkomponenten werden durch den Addierer 24 und einen Addierer 26 zusammengefaßt und bilden als Summenwert das Nachstellsignal st für den frequenzsteuerbaren Oszillator 11. Die Beiträge der einzelnen Komponenten des PID-Reglers können durch drei Multiplizierer 27, 28, 29 mittels zugeführter Koeffizienten c1, c2, c3 verändert werden.

In den Signalpfad des Phasenabweichungswertes ϕd und des Frequenzabweichungswertes fd ist jeweils eine als Schalter dargestellte Blockiereinrichtung 30,31 eingefügt, mit der der Signalpfad gesperrt werden kann. Die Sperrung erfolgt immer dann, wenn in der Bewertungseinrichtung 12 erkannt wird, daß der Zuverlässigkeitswert für den jeweiligen Abweichungswert ϕd, fd nicht ausreichend ist. Erkennt beispielsweise einer der beiden Schwellwertdetektoren 20, 21, daß der zugeführte Wert außerhalb der vorgegebenen Schwellwerte liegt, dann sperrt eine Logikstufe 32, beispielsweise ein ODER-Gatter, die Blockierstufe 30. Der Phasenabweichungswert fd ist durch die Phasen-Differenzbildung mindestens mit zwei Phasenabweichungswerten ϕd verknüpft. Mindestens einer dieser Phasenabweichungswerte ϕd muß als unzuverlässig erkannt sein, dann sperrt eine Logikstufe 33 die Blockiereinrichtung 31 für den Frequenzabweichungswert fd. Der Zuverlässigkeitswert hierzu wird mittels des Schwellwertdetektors 20 aus den beiden zeitlich korrespondierenden Amplitudenbewertungen gewonnen. Wenn einer oder beide Werte außerhalb der vorgegebenen Schwellwerte b1, b2 liegt oder liegen, dann ist der aktuelle Frequenzabweichungswert fd nicht zuverlässig und wird mittels der Blockiereinrichtung 31 gesperrt. Die Logikstufe 33 kann ebenfalls durch ein ODER-Gatter realisiert sein. Der Zeitausgleich für die Eingangssignale des Gatters 33 erfolgt durch die Verzögerungsstufe 34.

Es wird darauf hingewiesen, daß die in Fig. 2 dargestellte Bewertungseinrichtung 12 nur eine von vielen Varianten darstellt. Sie ist besonders einfach, weil sie nur zwei Schwellwertdetektoren 20, 21, zwei einfache Logikstufen 32, 33 und eine Verzögerungsstufe 34 zur Steuerung der beiden Blockiereinrichtungen 30, 31 benötigt. Dabei ist sie sehr effektiv, weil sie sowohl den Betragswert b als auch den Phasenwert ϕ bzw. den Phasenabweichungswert ϕd zur Bestimmung des Zuverlässigkeitswertes verwendet und bei einem Koordinatenumsetzer 8 nach dem Cordic-Verfahren stehen sowohl der Phasenwert ϕ als auch der Betragswert b für diesen Zweck zur Verfügung. Wird in der Bewertungseinrichtung 12 lediglich einer der beiden Werte ϕd, b zur Bildung des Zuverlässigkeitswertes verwendet, dann führt das gegenüber bisherigen Schaltungen auch zu einer Verbesserung, man verschenkt jedoch unnötig leicht erreichbare Vorteile.

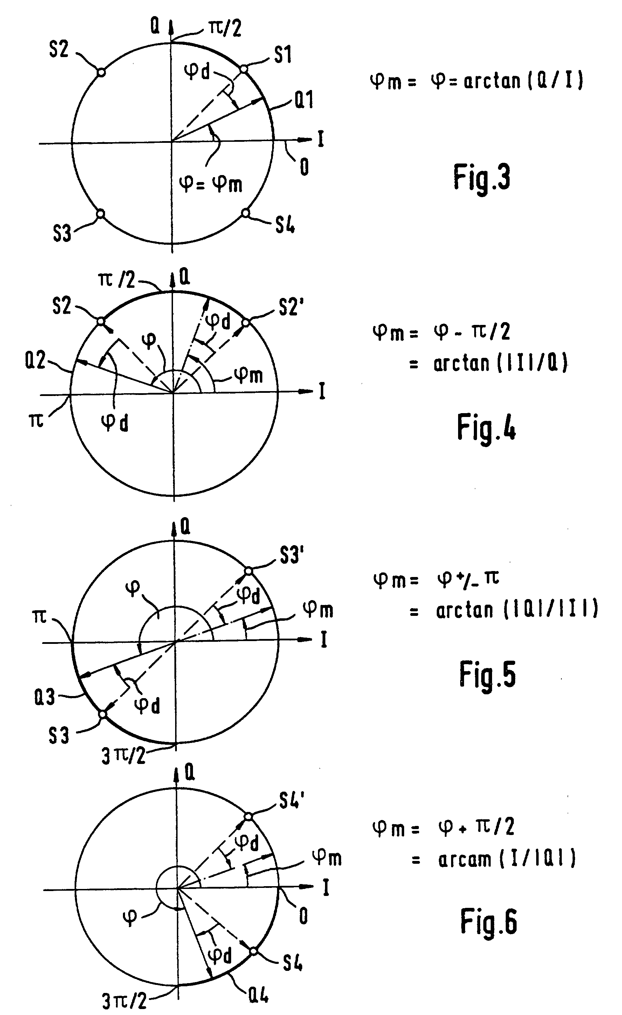

Die Fig. 3 zeigt für den ersten Quadrant Q1 im Zeigerdiagramm die Bildung des Phasenabweichungswertes ϕd in Abhängigkeit vom aktuellen Phasenwert ϕ, der im ersten Quadrant mit dem gespiegelten Phasenwert ϕm identisch ist. Die Figuren 4 bis 6 zeigen im Zeigerdiagramm die Spiegelung der drei Quadranten Q2 bis Q4 in den ersten Quadrant Q1. Zur einfacheren Darstellung der Spiegelung oder Winkeldrehung wird eine QPSK-Modulation mit den vier Symbolen S1 bis S4 angenommen. Für eine größere Anzahl von Symbolen, also bei einem größeren Alphabet, ändert sich die grundsätzliche Funktionsweise der Spiegelung nicht. Der zu spiegelnde Phasenwert ϕ ist durch die beiden Quadratursignalkomponenten I, Q definiert. Die Spiegelung des Phasenwertes ϕ in den gespiegelten Phasenwert ϕm erfolgt mittels einer Betragsbildung und/oder einer sinngemäßen Vertauschung der beiden Quadratursignalkomponenten I, Q. Durch dieses Verfahren wird der dem jeweiligen Quadrant Q2, Q3, Q4 zugeordnete Phasenabweichungswert ϕd exakt mit dem gleichen Betrag und gleichen Vorzeichen in den ersten Quadrant Q1 gespiegelt, sofern der Phasenabweichungswert innerhalb der Grenzen des zugehörigen Symbol-Quadranten liegt. Die Winkelrelation zwischen dem gespiegelten Phasenwert ϕm und dem gespiegelten Symbol S2', S3'oder S4' bleibt erhalten. Um von dem gespiegelten Phasenwert ϕm zum jeweiligen Phasenabweichungswert ϕd zu gelangen, wird vom gespiegelten Phasenwert ϕm der bereits genannte Phasenkorrekturwert ϕc abgezogen, der von der jeweiligen Modulation abhängig ist und dem gespiegelten Phasenwert des zugehörigen Symbols entspricht. Im dargestellten Beispiel der QPSK-Modulation hat der Phasenkorrekturwert ϕc für das erste Symbol S1 und die gespiegelten Symbole S2', S3', S4' den Wert ϕc = π/4. Die folgende Aufstellung gibt für alle vier Quadranten das Bildungsgesetz für den gespiegelten Phasenwert ϕm an:

| | |
|---|---|
| erster Quadrant Q1 von ϕ = 0 bis π/2 | ϕm = arctan (Q/I), |
| zweiter Quadrant Q2 von ϕ = π/2 bis π | ϕm = arctan (\|I\|/Q), |
| dritter Quadrant Q3 von ϕ = π bis 3π/2 | ϕm = arctan (\|Q\|/\|I\|), |
| vierter Quadrant Q4 von ϕ = 3π/2 bis 0 | ϕm = arctan (I/\|Q\|). |

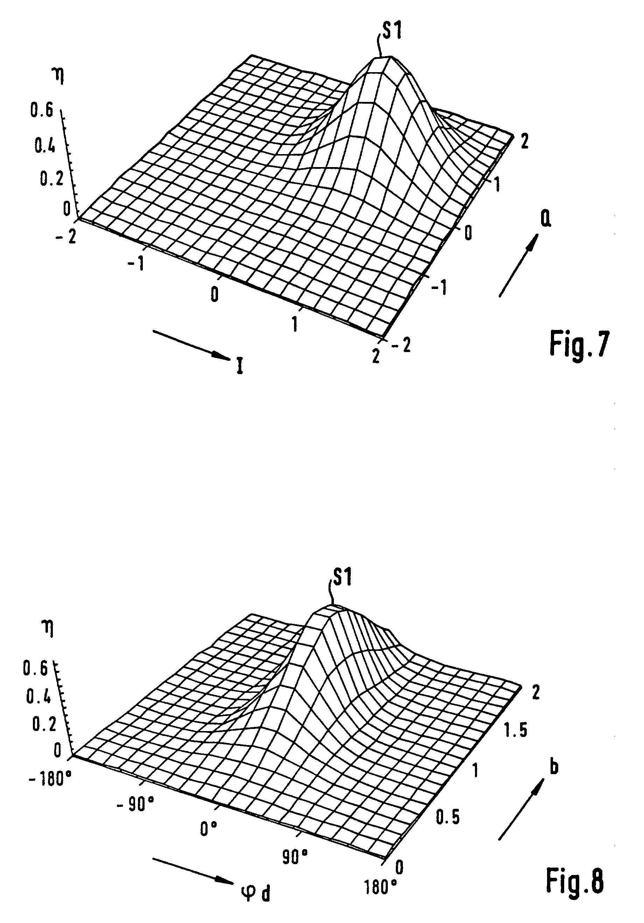

Fig. 7 zeigt die Wahrscheinlichkeitsverteilung η der Quadratursignalkomponenten I, Q über der karthesischen I-Q-Ebene, wenn sie mit unkorreliertem Rauschen überlagert sind, wobei das Rauschen eine Gaußverteilung aufweist. Durch die Quadraturbindung der I- und Q-Komponente müßte eigentlich die resultierende Zeigerlänge immer den Betrag 1 aufweisen, sofern die Zeigerlänge normiert ist. In Fig. 7 ist der Fall dargestellt, daß durch die Quadratursignalkomponenten I, Q das erste Symbol S1 dargestellt werden soll, das im ersten Quadrant bei einem Phasenwert von 45 Grad liegt. Ohne Störüberlagerung müßte die Wahrscheinlichkeit η für die beiden Komponenten I, Q bei den Koordinaten I = 0,701 und Q = 0,701 des Symbols S1, den Wahrscheinlichkeitswert η = 1 aufweisen und überall sonst den Wert Null. Fig. 7 zeigt, daß statt dessen eine Gaußverteilung der I- und Q-Komponente vorliegt, deren Maximum beim Symbol S1 liegt. Wenn das Signalrauschverhältnis S/N größer wird, dann wird die Wahrscheinlichkeitsverteilung beim Symbol S1 höher und schmaler und wenn das Signal/Rauschverhältnis schlechter wird, dann sinkt das Maximum der Wahrscheinlichkeitsverteilung beim Symbol S1 ab und die Glockenkurve wird entsprechend breit.

In Fig. 8 ist die Fig. 7 entsprechende Wahrscheinlichkeitsverteilung η dargestellt, so wie sie sich über einer karthesischen Ebene aus dem Phasenabweichungswert ϕd und dem Betragswert b darstellen würde. Die aus der Wahrscheinlichkeitsverteilung gebildete Glockenkurve ist nicht mehr rotationssymmetrisch wie in Fig. 7. Dies ist jedoch lediglich eine Frage des Abbildungsmaßstabes vom Betragswert b und Phasenabweichungswert ϕd, der von -180 Grad bis +180 Grad dargestellt ist.

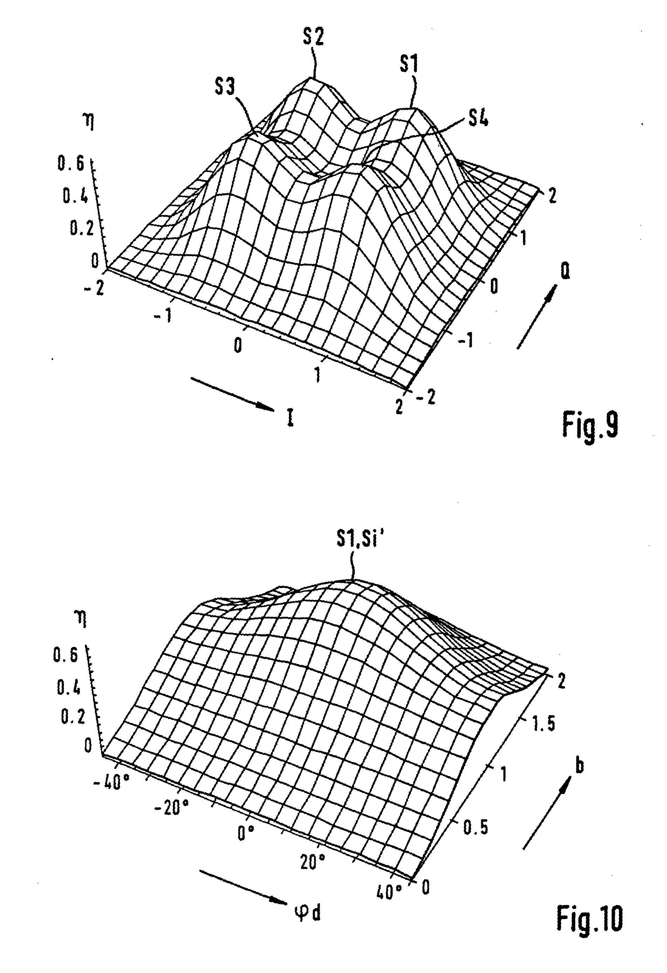

In Fig. 9 ist für eine QPSK-Modulation mit den vier gleichwahrscheinlichen Symbolen S1, S2, S3, S4 die Wahrscheinlichkeitsverteilung η über der I-Q-Ebene dargestellt, ähnlich wie in Fig. 7. Die vier Symbolwerte liegen dabei in den vier Quadranten, die durch die Vorzeichen der Quadratursignalkomponenten I, Q bestimmt sind. Eine sichere Trennung der vier Symbole ist nun durch die Angabe des jeweiligen Quadranten nicht mehr möglich, weil für die Quadrantengrenzen 1 = 0 und Q = 0 der Wahrscheinlichkeitswert η für das Vorhandensein einer der Nachbarsymbole viel zu groß ist. Dies geht ebenfalls aus Fig. 10 hervor, die dem ersten Quadranten entspricht und außer dem ersten Symbolwert S1 alle gespiegelten Symbolwerte Si' aus den anderen Quadranten enthält. In der räumlichen Darstellung von Fig. 10 ist die Wahrscheinlichkeitsverteilung η über den karthesischen Koordinaten aus Phasenabweichungswert ϕd und Betragswert b aufgetragen. Fig. 10 entspricht dabei bis auf den gespeizten Phasenabweichungsmaßstab Fig. 8, nur daß nun alle vier Symbole mit gleicher Wahrscheinlichkeit η auftreten können.

Die Verwendung der Wahrscheinlichkeitsverteilung η zur Bestimmung der Zuverlässigkeit führt dazu, daß man sich auf Abweichungswerte beschränkt, die den höchsten Wahrscheinlichkeitsbereichen von Fig. 10 zugeordnet sind. Eine klarere Aussage über die Zuverlässigkeit der gemessenen Phasenabweichungswerte ϕd bekommt man jedoch, wenn die jeweiligen Wahrscheinlichkeitswerte η mit der jeweiligen Ziehkraft oder Rückstellkraft aus dem Phasenabweichungswert ϕd kombiniert werden. Dabei muß der tatsächliche Beitrag jedes der vier Symbole S1 bis S4 berücksichtigt werden und nicht nur der gespiegelte Zustand. Dies erfolgt zweckmäßigerweise durch eine Multiplikation des dem jeweiligen Symbol zugeordneten Wahrscheinlichkeitswertes η entsprechend Fig. 10 mit dem tatsächlichen Phasenabweichungswert ϕd und der Addition dieser vier Produkte. Das Ergebnis bildet einen sehr brauchbaren Zuverlässigkeitswert z, der in einer räumlichen Darstellung über den karthesischen Koordinaten aus dem Phasenabweichungswert ϕd und Betragswert b im Diagramm von Fig. 11 dargestellt ist. Durch die Gewichtung aller vier Wahrscheinlichkeiten η mit dem tatsächlichen Phasenabweichungswert ϕd ergibt sich gleichsam eine Normierung für den Zuverlässigkeitswert z, der nun positive und negative Werte aufweisen kann. Positive Zuverlässigkeitswerte z entsprechen einer positiven Ziehkraft und negative Zuverlässigkeitswerte z einer negativen Ziehkraft. Aus der Betrachtung der Zuverlässigkeitsverteilung z von Fig. 11 lassen sich nun ganz klar diejenigen Bereiche unterscheiden, deren Ziehkraft-Vorzeichen gleichsinnig zum jeweiligen Phasenabweichungswert ϕd ist. Bereiche mit richtiger Zuordnung zwischen Zuverlässigkeitswert z und Ziehrichtung sind in Fig. 11 hell dargestellt, Bereiche mit falscher Ziehrichtung dunkel und schließlich Bereiche mit neutraler Ziehrichtung in einem Grauton. Die Bestimmung geeigneter Zuverlässigkeitswerte z besteht nun darin, daß für die Regelung des Trägerregelkreises nur diejenigen Phasenabweichungswerte ϕd verwendet werden sollen, die die richtige Regelrichtung bewirken und damit den vorzeichenrichtigen Zuverlässigkeitsbereichen entsprechen. Oder im Umkehrschluß müssen für die Trägerregelung mindestens diejenigen Bereiche des Phasenabweichungswertes ϕd ausgeschaltet werden, die eine Regelkreisumkehrung bewirken, was aus dem Zuverlässigkeitsdiagramm z von Fig. 11 erkennbar ist.

Fig. 12 zeigt in Aufsicht ein Zuverlässigkeitsdiagramm entsprechend Fig. 11, wobei die Graustufen in der Bedeutung gegenüber Fig. 11 vertauscht sind. Die dargestellten Linien zeigen Linien gleicher Zuverlässigkeit z und entsprechen der Darstellung von Höhenlinien. Das Diagramm zeigt, daß bei kleinen Beträgen b die Zuverlässigkeit abnimmt und mit dem gemessenen Phasenabweichungswert ϕd besser keine Regelung durchgeführt wird. Ein Schwellwert b1 mit dem Wert 0,7 würde in Fig. 12 diese unsicheren Bereiche weitgehend abschneiden. Große Beträge b sind unkritisch, so daß man auf eine zweite Schaltschwelle b2 verzichten kann oder diese hoch genug wählt, beispielsweise b2 ≥ 3. Für den Phasenabweichungswert ϕd liegt das Maximum für die Zuverlässigkeit z nicht bei den theoretischen Symbolwerten +/- 45 Grad, sondern deutlich darunter, weil dort die Beeinflußung durch die Nachbarsymbole geringer ist. Dies geht ebenfalls deutlich aus dem Aufsichtsdiagramm von Fig. 12 hervor. Mögliche Grenzen für eine ausreichende Zuverlässigkeit liegen beispielsweise bei den Phasenabweichungswerten ϕ1 = + 35 Grad und ϕ2 = - 35 Grad.

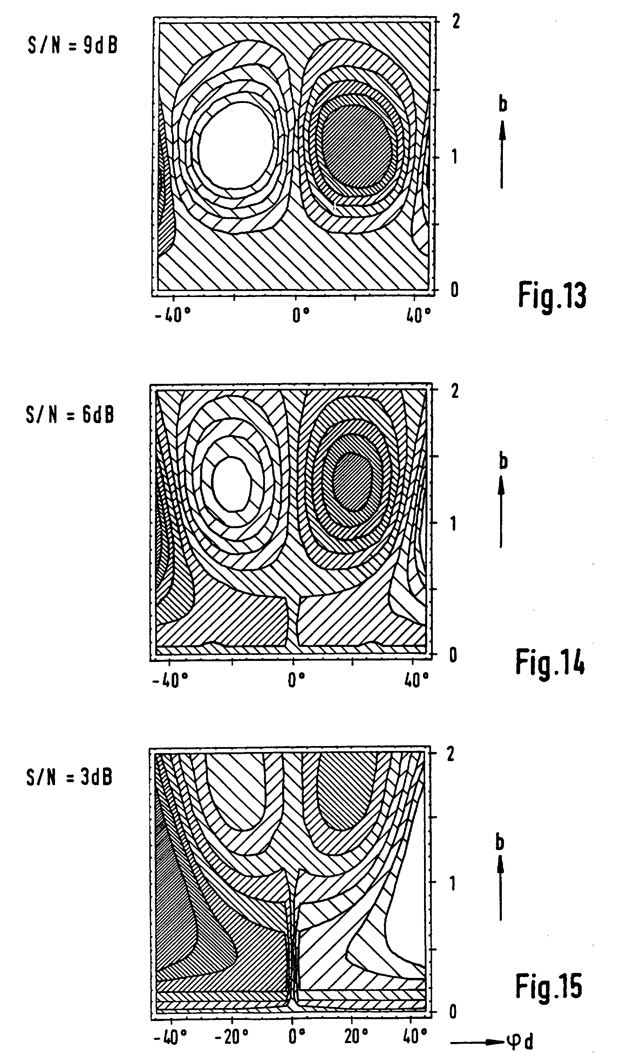

Die Figuren 13 bis 15 zeigen zur Verdeutlichung Aufsichtdiagramme für den Zuverlässigkeitswert z bei verschiedenen Signalrauschverhältnissen S/N. Fig. 13 zeigt das Aufsichtsdiagramm für S/N = 9 dB, Fig. 14 zeigt das Aufsichtsdiagramm für S/N = 6 dB und schließlich Fig. 15 das Aufsichtsdiagramm für S/N = 3 dB. Die verwendbaren Zuverlässigkeitsbereiche nehmen mit steigendem S/N-Verhältnis selbstverständlich zu. In gleichem Maße nimmt das Maximum des Zuverlässigkeitswertes z und damit die Sicherheit der Auswertung zu. Bei sich verschlechternden S/N-Verhältnissen tritt eine deutliche Verschiebung der Zuverlässigkeits-Maximalwerte in Richtung größerer Beträge b ein. Das letzte Diagramm Fig. 15 mit S/N = 3 dB zeigt, daß die unzuverlässigen Bereiche deutlich größer als die zuverlässigen Bereiche sind. Eine zufriedenstellende Regelung des Trägerregelkreises ist hier nicht mehr möglich. Es wird darauf hingewiesen, daß die Graustufen von Fig. 13 bis Fig. 15 denjenigen von Fig. 11 entsprechen, nicht jedoch denjenigen von Fig. 12.

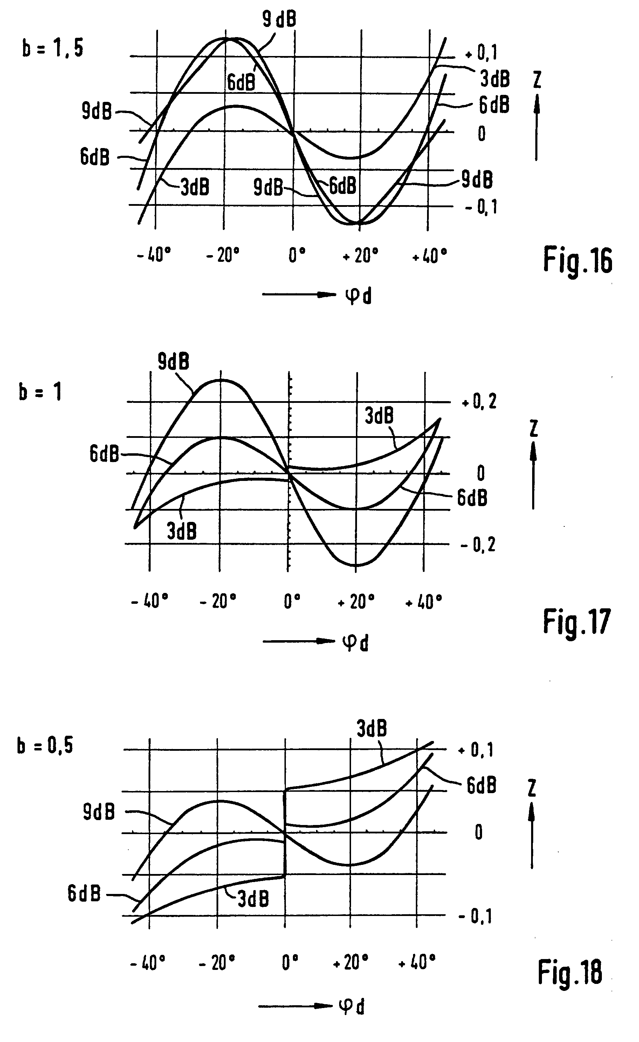

Die Bestimmung des Zuverlässigkeitswertes z aus der gewichteten Überlagerung der einzelnen Wahrscheinlichkeiten geht auch aus den Figuren 16 bis 18 hervor. Insbesondere lassen sich dort die Unstetigkeiten erkennen, die sich aus der Multiplikation der Wahrscheinlichkeitswerte η mit der jeweiligen Ziehkraft ergeben. Die Ziehkraft ist dabei der Phasenabweichungswert bis zu dem tatsächlichen Symbol und nicht nur der Phasenabweichungswert im ersten Quadrant. In den Figuren 16, 17 und 18 sind die Zuverlässigkeitswerte z über dem Phasenabweichungswert ϕd jeweils für drei Signalrauschverhältnisse S/N aufgetragen und zwar für S/N = 9 dB, S/N = 6 dB und S/N = +3 dB. Dabei hat Fig. 16 als gemeinsamen Parameter den Betragswert b = 1,5. Der gemeinsame Parameter bei den Kurven von Fig. 17 ist der Betragswert b = 1 und bei Fig. 18 der Betragswert b = 0,5. Der Zuverlässigkeitsverlauf z in Fig. 16 zeigt für das schwache Signal S/N = 3 dB eine geringe Unstetigkeitsstelle bei 0 Grad, wobei der Betragswert b = 1,5 als Parameter dient. Bei dem geringeren Betragswert b = 1 von Fig. 17 hat sich diese Unstetigkeit bei 0 Grad etwas vergrößert. Gleichzeitig liegt der gesamte Verlauf der 3 dB-Kurve im unzuverlässigen Bereich, das heißt, daß der Zuverlässigkeitswert z dort überall das falsche Vorzeichen hat. Bei noch kleineren Beträgen b = 0,5 verlaufen auch die Kurven für S/N = 3 dB und S/N = 6 dB ständig im unzuverlässigen Bereich - also mit falschem Vorzeichen. Zudem weist jetzt auch der Zuverlässigkeitsverlauf z für S/N = 6 dB eine Unstetigkeit bei 0 Grad auf. Die Unstetigkeit der S/N = 3 dB-Kurve ist gegenüber Fig. 17 noch größer geworden. Die Unstetigkeiten ergeben sich aus dem beschriebenen Modell der gewichteten Überlagerung zur Bestimmung des Zuverlässigkeitswertes z. Bleibt man in der Realität im Bereich ausreichend großer Zuverlässigkeiten, dann liefert das Modell eine gute Näherung der Wirklichkeit.

Es wird darauf hingewiesen, daß die Verbesserung des Trägerregelkreises und das zugehörige Verfahren leicht an die verschiedenen Schaltungstechnologien angepaßt werden kann. Insbesondere ist eine Realisierung als monolithisch integrierte Schaltung möglich, die in derartigen Empfängern verwendet werden kann. Ob dabei Teile der Funktion oder gar der gesamte Ablauf mittels eines programmierbaren Prozessors realisiert wird, ist in das Belieben des Fachmannes gestellt. Die Realisierung mittels eines Prozessors hat bekanntlich den Vorteil, daß die Schaltung flexibler wird, weil sie mittels programmierbarer Parameter an die verschiedenen Aufgaben angepaßt werden kann. Zudem kann durch ein entsprechendes Programm auch nach der Integration in die Verarbeitung eingegriffen werden.

## Patentansprüche

1. Trägerregelkreis (1) für einen Empfänger von digital übertragenen Signalen, der in Signalflußrichtung der geschlossenen Trägerregelschleife (1) einen mit den empfangenen Signalen gespeisten Quadraturdemodulator (3), eine Symbolerkennungseinrichtung (4) mit einem Koordinatenumsetzer (8), einen Detektor (9) zur Bildung eines Phasenabweichungswertes (ϕd) und/oder eines Frequenzabweichungswertes (fd), eine Rückkopplungseinrichtung (10) und einen mit dem Quadraturdemodulator verbundenen frequenzsteuerbaren Oszillator (11) enthält, wobei eine Bewertungseinrichtung (12) mit Schwellwertdetektoren (20, 21) aus den in polare Koordinaten umgesetzten Signalen des Trägerregelkreises (1) einen Zuverlässigkeitswert (z) für den jeweils im Detektor (9) gemessenen Phasenabweichungswert (ϕd) bzw. Frequenzabweichungswert (fd) bestimmt,
**dadurch gekennzeichnet, daß**
die Bewertungseinrichtung (12) mit ihren Ausgangssignalen (gl, g2) als zusätzlichen Steuergrößen in den Trägerregelkreis (1) in Abhängigkeit von dem ermittelten Zuverlässigkeitswert (z) eingreift, wobei eine erste bzw. zweite Blockiereinrichtung (30 bzw. 31) den Trägerregelkreis (1) blockiert, so dass der Phasenabweichungswert (ϕd) bzw. der Frequenzabweichungswert (fd) ohne Einfluss auf den Trägerregelkreis (1) ist, wenn der Zuverlässigkeitswert (z) dies anzeigt.

2. Trägerregelkreis (1) nach Anspruch 1, **dadurch gekennzeichnet, daß** die Bewertungseinrichtung (12) einen Phasen- (ϕ) und/oder einen Betragswert (b) auswertet, die mittels eines Koordinatenumsetzers (8) aus einer vom Quadraturdemodulator (3) abhängigen Inphasenkomponente (I) und einer Quadraturphasenkomponente (Q) gebildet sind.

3. Trägerregelkreis (1) nach Anspruch 2, **dadurch gekennzeichnet, daß** die Bewertungseinrichtung (12) einen ersten Schwellwertdetektor (21) für den Phasenwert (ϕ) oder den Phasenabweichungswert (ϕd) und/oder einen zweiten Schwellwertdetektor (20) für den Betragswert (b) oder einen Betragsabweichungswert enthält.

4. Trägerregelkreis (1) nach Anspruch 3, **dadurch gekennzeichnet, daß** eine erste Blockiereinrichtung (30) in Abhängigkeit vom ersten Schwellwertdetektor (21) und/oder eine zweite Blockiereinrichtung (31) in Abhängigkeit vom zweiten Schwellwertdetektor (20) gesteuert ist.

5. Trägerregelkreis nach Anspruch 4, **dadurch gekennzeichnet, daß** mittels der ersten Blockiereinrichtung (30) die Übernahme des Phasenabweichungswertes (ϕd) und mittels der zweiten Blockiereinrichtung (31) die Übernahme des Frequenzabweichungswertes (fd) in die Rückkopplungseinrichtung (10) gesperrt sind.

6. Trägerregelkreis (1) nach Anspruch 1, **dadurch gekennzeichnet, daß** die Rückkopplungseinrichtung (10) einem Proportional-Integral-Differential-Regler, bekannt als PID-Regler, entspricht, wobei einem Proportionalteil (P) und einem Integralteil (Ir) als Eingangssignal der Phasenabweichungswert (ϕd) und einem Differenzialteil (D) der Frequenzabweichungswert (fd) zugeführt sind.

7. Trägerregelkreis (1) nach einem der Ansprüche 1 bis 6, **dadurch gekennzeichnet, daß** die Rückkopplungseinrichtung (10) mindestens einen Multiplizierer (27, 28, 29) enthält und dem Multiplizierer als Multiplikationsfaktor ein Koeffizient (c1, c2, c3) zugeführt ist.

8. Trägerregelkreis (1) nach einem der Ansprüche 2 bis 7, **dadurch gekennzeichnet, daß** der mit der Inphasenkomponente (I) und der Quadraturphasenkomponente (Q) gespeiste Koordinatenumsetzer (8) nach einem modifizierten Cordic-Verfahren arbeitet, bei dem der im ersten zweiten, dritten oder vierten Quadrant liegende Phasenwert (ϕ) in den ersten Quadrant gespiegelt ist und einen gespiegelten Phasenwert (ϕm) wie folgt bildet:
| | |
|---|---|
| für den Bereich ϕ = 0 bis π/2 | ϕm = arctan ( Q/I ), |
| für den Bereich ϕ = π/2 bis π | ϕm = arctan (\|I\|/Q), |
| für den Bereich ϕ = π bis 3π/2 | ϕm = arctan (\|Q\|/\|I\|) und |
| für den Bereich ϕ = 3π/2 bis 0 | ϕm = arctan ( I/\|Q\|). |

9. Trägerregelkreis (1) nach Anspruch 8, **dadurch gekennzeichnet, daß** der Phasenabweichungswert (ϕd) aus dem gespiegelten Phasenwert (ϕm) durch die Subtraktion eines von der Modulation abhängigen Phasenkorrekturwertes (ϕc) gebildet ist.

10. Trägerregelkreis (1) nach einem der Ansprüche 1 bis 9, **dadurch gekennzeichnet, daß** der Detektor (9) den Frequenzabweichungswert (fd) mittels einer Modulo-Differenzbildung aus dem Phasenabweichungswert (ϕd) oder Phasenwert (ϕ) erzeugt.

11. Trägerregelkreis (1) nach einem der Ansprüche 1 bis 10 **dadurch gekennzeichnet, daß** die Rückkopplungseinrichtung (10) mindestens ein Moving Time Averager-Filter, bekannt als MTA-Filter, enthält, dessen Steuertakt bei einem ausreichenden Zuverlässigkeitswert (z) freigegeben und bei einem nicht ausreichenden Zuverlässigkeitswert (z) gesperrt ist.

## Claims

1. A carrier control loop (1) for a receiver of digitally transmitted signals, comprising, in the direction of signal flow of the closed carrier control loop (1), a quadrature demodulator (3) fed with the received signals, a symbol recognition device (4) including a resolver (8), a detector (9) for forming a phase deviation value (ϕd) and/or a frequency deviation value (fd), a feedback device (10), and a variable-frequency oscillator (11) connected to the quadrature demodulator, wherein an evaluating device (12) comprising threshold detectors (20, 21) determines from signals of the carrier control loop (1) a reliability value (z) for the respective phase deviation value (ϕd) and/or frequency deviation value (fd) measured in the detector (9),
**characterized in that**
dependent on the determined reliability value (z), the evaluating device (12) acts on the carrier control loop (1) via its output signals (g1, g2), which serve as additional control quantities, with a first or a second blocking device (30, 31) blocking the carrier control loop (1) so that the phase deviation value (ϕd) or the frequency deviation value (fd), respectively, will be without influence on the carrier control loop (1) when the reliability value (z) indicates this.

2. A carrier control loop (1) as set forth in claim 1, **characterized in that** the evaluating device (12) evaluates a phase value (ϕ) and/or an absolute value (b) which are formed by means of the resolver (8) from an in-phase component (I) and a quadrature component (Q) produced by the quadrature demodulator.

3. A carrier control loop (1) as set forth in claim 2, **characterized in that** the evaluating device (12) comprises a first threshold detector (21) for the phase value (ϕ) or the phase deviation value (ϕd) and/or a second threshold detector (20) for the absolute value (b) or an absolute deviation value.

4. A carrier control loop (1) set forth in claim 3, **characterized in that** a first blocking device (30) is controlled in accordance with the output of the first threshold detector (21), and/or a second blocking device (31) is controlled in accordance with the output of the second threshold detector (20).

5. A carrier control loop as set forth in claim 4, **characterized in that** by means of the first blocking device (30), the transfer of the phase deviation value (ϕd) into the feedback device (10) is blocked, and that by means of the second blocking device (31), the transfer of the frequency deviation value (fd) into the feedback device (10) is blocked.

6. A carrier control loop (1) as set forth in claim 1, **characterized in that** the feedback device (10) corresponds to a proportional-integral-derivative controller, known as a PID controller, with the phase deviation value (ϕd) being fed to a proportional section (B) and an integral section (Ir), and the frequency deviation value (fd) being fed to a derivative section (D).

7. A carrier control loop (1) as set forth in any one of claims 1 to 6, **characterized in that** the feedback device (10) comprises at least one multiplier (27, 28, 29), and that a coefficient (c1, c2, c3) is fed to the multiplier as a multiplication factor.

8. A carrier control loop (1) as set forth in any one of claims 2 to 7, **characterized in that** the resolver (8), which is fed with the in-phase component (I) and the quadrature component (Q), uses a modified CORDIC technique in which the phase value (ϕ) lying in the first, second, third, or fourth quadrant is mirrored into the first quadrant and forms a mirrored phase value (ϕm) as follows:
| | |
|---|---|
| for the range ϕ = 0 to π/2 | ϕm = arctan (Q/I) |
| for the range ϕ = π/2 to π | ϕm = arctan (\|I\|/Q), |
| for the range ϕ = π to 3π/2 | ϕm = arctan (\|Q\|/\|I\|), and |
| for the range ϕ = 3π/2 to 0 | ϕm = arctan (I/\|Q\|). |

9. A carrier control loop (1) as set forth in claim 8, **characterized in that** the phase deviation value (ϕd) is formed by subtracting a modulation-dependent phase correction value (ϕc) from the mirrored phase value (ϕm).

10. A carrier control loop (1) as set forth in any one of claims 1 to 9, **characterized in that** the detector (9) forms the frequency deviation value (fd) from the phase deviation value (ϕd) or phase value (ϕ) by modulo subtraction.

11. A carrier control loop (1) as set forth in any one of claims 1 to 10, **characterized in that** the feedback device (10) comprises at least one moving-time-averager filter, known as an MTA filter, whose control clock is enabled at a sufficient reliability value (z) and inhibited at an insufficient reliability value (z).

## Revendications

1. Circuit de régulation de porteuse (1) pour un récepteur de signaux numériques transmis, qui comprend, dans la direction du flux des signaux de la boucle de régulation de porteuse (1), un démodulateur en quadrature (3) qui est alimenté par les signaux reçus, un dispositif de reconnaissance de symboles (4) comportant un convertisseur de coordonnées (8) un détecteur (9) destiné à la formation d'une valeur d'écart de phase (ϕd) et/ou d'une valeur d'écart de fréquence (fd), un dispositif de réaction (10) et un oscillateur (11) qui est commandé en fréquence et est relié au démodulateur en quadrature (3), dans lequel un dispositif d'évaluation (12) qui comporte des détecteurs de valeur de seuil (20, 21) détermine, à partir des signaux du circuit de régulation de porteuse (1) qui ont été convertis en coordonnées polaires, une valeur de fiabilité (z) pour la valeur d'écart de phase (ϕd) ou la valeur d'écart de fréquence (fd) mesurée,
**caractérisé en ce que**
le dispositif d'évaluation (12) entre dans le circuit de régulation de porteuse (1), par ses signaux de sortie (g1, g2) qui constituent des grandeurs de commande supplémentaires, en fonction de la valeur de fiabilité (z) qui a été déterminée et **en ce qu'**un premier ou un deuxième dispositif de blocage (30, resp. 31) bloque le circuit de régulation de porteuse (1) de telle manière que la valeur d'écart de phase (ϕd) ou la valeur d'écart de fréquence (fd) n'aie pas d'influence sur le circuit de régulation de porteuse (1) quand la valeur de fiabilité (z) indique cela.

2. Circuit de régulation de porteuse (1) selon la revendication 1, **caractérisé en ce que** le dispositif d'évaluation (12) évalue une valeur de phase (ϕ) et/ou une valeur d'amplitude (b) qui sont formées au moyen d'un convertisseur de coordonnées (8) à partir d'une composante en phase (I) qui dépend du démodulateur en quadrature (3) et d'une composante en quadrature de phase (Q).

3. Circuit de régulation de porteuse (1) selon la revendication 2, **caractérisé en ce que** le dispositif d'évaluation (12) comprend un premier détecteur de valeur de seuil (21) pour la valeur de phase (ϕ) ou la valeur d'écart de phase (ϕd) et/ou un deuxième détecteur de valeur de seuil (20) pour la valeur d'amplitude (b) ou une valeur d'écart d'amplitude.

4. Circuit de régulation de porteuse (1) selon la revendication 3, **caractérisé en ce qu'**un premier dispositif de blocage (30) est commandé en fonction du premier détecteur de valeur de seuil (21) et/ou un deuxième dispositif de blocage (31) est commandé en fonction du deuxième détecteur de valeur de seuil (20).

5. Circuit de régulation de porteuse (1) selon la revendication 4, **caractérisé en ce que**, au moyen du premier dispositif de blocage (30), on bloque la prise en charge de la valeur d'écart de phase (ϕd) et, au moyen du deuxième dispositif de blocage (31), on bloque la prise en charge de la valeur d'écart de fréquence (fd) dans le dispositif de réaction (10).

6. Circuit de régulation de porteuse (1) selon la revendication 1, **caractérisé en ce que** le dispositif de réaction (10) correspond à un régulateur à action proportionnelle, intégrale et dérivée, connu sous le nom de régulateur PID, la valeur d'écart de phase (ϕd) étant envoyée en tant que signal d'entrée à une partie proportionnelle (P) et à une partie d'intégration (Ir) et la valeur d'écart de fréquence (fd) étant envoyée en tant que signal d'entrée à une partie différentielle (D).

7. Circuit de régulation de porteuse (1) selon l'une quelconque des revendications 1 à 6, **caractérisé en ce que** le dispositif de réaction (10) comprend au moins un multiplicateur (27, 28, 29) et **en ce que** l'on envoie un coefficient (c1, c2, c3) au multiplicateur en tant que facteur de multiplication.

8. Circuit de régulation de porteuse (1) selon l'une quelconque des revendications 2 à 7, **caractérisé en ce que** le convertisseur de coordonnées (8) qui est alimenté par la composante en phase (I) et la composante en quadrature de phase (Q), travaille selon un processus de Cordic modifié selon lequel la valeur de phase (ϕ) existant dans le deuxième, le troisième et le quatrième quadrants est transformé par symétrie spéculaire dans le premier quadrant et forme une valeur de phase (ϕm) à symétrie spéculaire de la manière suivante :
| | |
|---|---|
| pour le domaine ϕ = 0 à π/2 | ϕm = arctg (Q/I) |
| pour le domaine ϕ = π/2 à π | ϕm = arctg (\| I \|/Q) |
| pour le domaine ϕ = π à 3π/2 | ϕm = arctg (\| Q \|/\| I \|) et |
| pour le domaine ϕ = 3π/2 à 0 | ϕm = arctg (I/\| Q \|). |

9. Circuit de régulation de porteuse (1) selon la revendication 8, **caractérisé en ce que** la valeur d'écart de phase (ϕd) est formée à la partir de valeur de phase (ϕm) à symétrie spéculaire par la soustraction d'un signal de correction de phase (ϕc) qui est fonction de la modulation.

10. Circuit de régulation de porteuse (1) selon l'une quelconque des revendications 1 à 9, **caractérisé en ce que** le détecteur (9) produit la valeur d'écart de fréquence (fd) au moyen de la formation de la différence modulo, à partir de la valeur d'écart de phase (ϕd) et de la valeur de phase (ϕ).

11. Circuit de régulation de porteuse (1) selon l'une quelconque des revendications 1 à 10, **caractérisé en ce que** le dispositif de réaction (10) comprend au moins un filtre "moving time averager", connu sous le nom de filtre MTA, dont le cycle de commande est libéré quand la valeur de fiabilité (z) est suffisante et est bloqué quand la valeur de fiabilité (z) n'est pas suffisante.
